# EUROPÄISCHE PATENTSCHRIFT

(11) **EP 1 599 094 B1**
(45) Veröffentlichungstag und Bekanntmachung des Hinweises auf die Patenterteilung: **09.08.2006**
(21) Anmeldenummer: 04710863.4
(22) Anmeldetag: 13.02.2004
(51) Int. Cl.: A01N 25/00, A01N 57/12

(54) **SCHNECKENKÖDER**
SNAIL BAITS
APPATS POUR LIMACES

(30) Priorität: 26.02.2003 DE 10308108
(43) Veröffentlichungstag der Anmeldung: 30.11.2005
(73) Patentinhaber: Bayer CropScience AG, 40789 Monheim (DE)
(72) Erfinder: WIRTH, Wolfgang, 51429 Bergisch Gladbach (DE); BARON, Gerhard, 51377 Leverkusen (DE); KILIAN, Michael, 51379 Leverkusen (DE); RECKMANN, Udo, 50823 Köln (DE)
(86) Internationale Anmeldenummer: PCT/EP2004/001421
(87) Internationale Veröffentlichungsnummer: WO 2004/075634

(56) Entgegenhaltungen:
- WO-A-00/11948
- WO-A-97/26789
- DATABASE BIOSIS [Online] BIOSCIENCES INFORMATION SERVICE, PHILADELPHIA, PA, US; 1994, SCHUYTEMA G S ET AL: "Effects of dietary exposure to forest pesticides on the brown garden snail Helix aspersa Mueller" XP002292306 Database accession no. PREV199497097851 & ARCHIVES OF ENVIRONMENTAL CONTAMINATION AND TOXICOLOGY, Bd. 26, Nr. 1, 1994, Seiten 23-28, ISSN: 0090-4341
- G.WILKINSON (ED.): "Comprehensive Coordination Chemistry" 1987, PERGAMON PRESS , OXFORD, GB , XP002292444 G.Anderegg: 'Complexones', Kapitel 20.3, Seiten 777-792 das ganze Dokument

## Beschreibung

Die vorliegende Erfindung betrifft Schneckenköder auf Basis von Phosphonsäureestern, Verfahren zu deren Herstellung und deren Verwendung zur Bekämpfung von Schnecken.

Es ist bereits bekannt, terrestrische Schnecken mit Hilfe von Ködern zu bekämpfen, die Fraßstoffe und molluskizide Wirkstoffe, wie Methiocarb, Metaldehyd oder Metallchelate enthalten (vgl. DE 35 03 608A, DE 36 12 161A, WO 96-05 728A, WO 97-26 789A, WO 99-25 194A, WO 99-39 576A und WO 00-11 948A). Die Wirksamkeit dieser Präparate ist aber nicht immer befriedigend.

Es wurden nun neue Schneckenköder gefunden, die
1.
   a) Phosphonsäureester der Formel (I) 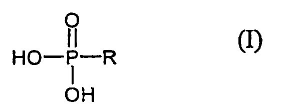 in welcher R für C₁-C₁₀Alkyl steht,
      welches einfach oder mehrfach, gleich oder verschieden durch PO₃H₂, CO₂H, OH, NH₂, CN, Halogen, C₁-C₈-Alkylamin oder C₂-C₁₆₋Dialkylamin substituiert ist und
      welches gegebenenfalls durch 1-6 Heteroatome aus der Reihe N, O, S, P unterbrochen ist, wobei Heteroatome nicht direkt miteinander verknüpft sind;
      und
      Ammonium-, Alkalimetall-, Erdalkalimetall- und/oder Eisen-Salze;
      oder
   b) Ammonium-, Alkalimetall-, Erdalkalimetall- und/oder Eisen-Salze der Phosphonsäureester der Formel (I) enthalten
   und
2. feinkörniges Getreidemehl,
3. gegebenenfalls Bindemittel und
4. gegebenenfalls eines oder mehrere Zusatzstoffe
enthalten.

Weiterhin wurde gefunden, dass sich die neuen Schneckenköder herstellen lassen, indem man
1. eine Vormischung aus
   - Phosphonsäureester der Formel (I) 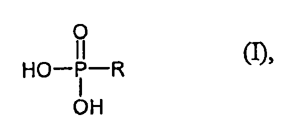 und Ammonium-, Alkalimetall-, Erdalkalimetall- und/oder Eisen-Salzen,
      oder
      Ammonium-, Alkalimetall-, Erdalkalimetall- und/oder Eisen-Salze der Phosphonsäureester der Formel (I)
   - mindestens einem Verdünnungsmittel und
   - gegebenenfalls Zusatzstoffen herstellt,
2. die so erhaltene Vormischung mit
   - feinkörnigem Getreidemehl,
   - gegebenenfalls Bindemittel und
   - gegebenenfalls Zusatzstoffen
   versetzt,
3. die resultierende Mischung gegebenenfalls mit soviel Wasser verrührt, dass ein homogener Teig entsteht,
4. den Teig extrudiert und zerkleinert und
5. das anfallende Produkt trocknet.

Schließlich wurde gefunden, dass die neuen Schneckenköder sehr gut zur Bekämpfung von terrestrischen Schnecken verwendbar sind.

Überraschenderweise zeigen die erfindungsgemäßen Köder bei der Bekämpfung von Schnecken eine deutlich bessere Wirksamkeit als die konstitutionell ähnlichsten, vorbekannten Präparate für den gleichen Anwendungszweck.

Die erfindungsgemäßen Schneckenköder sind durch die aufgeführten Bestandteile charakterisiert.

Bei den aktiven Komponenten, die in den erfindungsgemäßen Schneckenködern enthalten sind, handelt es sich entweder um
a) eines oder mehrere Ammonium-, Alkalimetall-, Erdalkalimetall- und/oder Eisen-Salze der Phosphonsäureester der Formel (I),
   oder um
b) eines oder mehrere Ammonium-, Alkalimetall-, Erdalkalimetall- und/oder Eisen-Salze der Phosphonsäureester der Formel (I) im Gemisch mit einem oder mehreren Magnesium-, Calcium- und/oder Eisen-Salzen
   oder um
c) Phosphonsäureester der Formel (I) im Gemisch mit einem oder mehreren Magnesium-, Calcium- und/oder Eisen-Salzen.

Bevorzugt sind Phosphonsäureester der Formel (Ia) 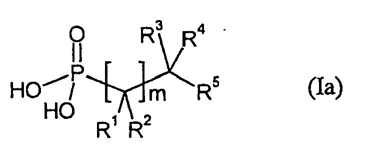 in welcher
- R¹, R², R³, R⁴ und R⁵: unabhängig voneinander jeweils für Wasserstoff, C₁-C₄-Alkyl, CO₂H, CH₂CO₂H, PO₃H₂, OH, Halogen, CN, NH₂ stehen und
- m: für die Zahlen 0, 1, 2, 3, 4 oder 5 steht.
- R¹, R², R³, R⁴ und R⁵: stehen bevorzugt unabhängig voneinander jeweils für Wasserstoff, Methyl, Ethyl, n-Propyl, iso-Propyl, n-Butyl, iso-Butyl, sec-Butyl, tert-Butyl, PO₃H₂, CO₂H, CH₂CO₂H, OH.
- m: steht bevorzugt für die Zahlen 0, 1 oder 2.

Ebenfalls bevorzugt sind Phosphonsäureester der Formel (Ib) 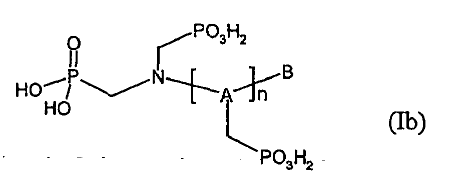 in welcher
- A: für C₁-C₆-Alkyl, C₁-C₆-Alkylamino, C₁-C₆-Alkoxy steht, wobei zwei Heteroatome nicht direkt aneinander gebunden sind,
- B: für H, OH, CH₂PO₃H₂, CN, Halogen, NH₂, C₁-C₈-Alkylamin oder C₂-C₁₆₋Dialkylamin steht,
- n: für die Zahlen 0, 1, 2, 3, 4 steht.
- A: steht bevorzugt für die nachfolgenden Gruppierungen: 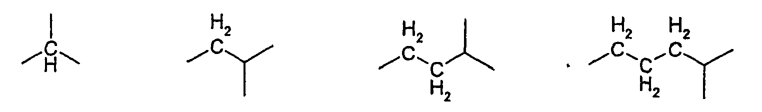 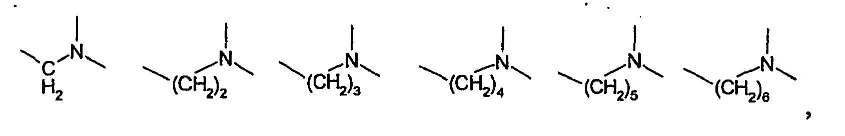 wobei das links gezeigte Kohlenstoffatom an den Stickstoff in Formel (Ib) gebunden ist.
- B: steht bevorzugt für H, OH oder CH₂PO₃H₂.
- n: steht bevorzugt für die Zahlen 0, 1 oder 2

Diese Restedefinitionen können untereinander, also auch zwischen den angegebenen bevorzugten Bereichen beliebig kombiniert werden. Ebenso können einzelne Definitionen entfallen. Erfindungsgemäß bevorzugt sind die Verbindungen der Formel (I), in welchen eine Kombination der vorstehend als bevorzugt aufgeführten Bedeutungen vorliegt. Die oben aufgeführten allgemeinen oder in Vorzugsbereichen aufgeführten Restedefinitionen gelten sowohl für die Endprodukte der Formel (I) als auch entsprechend für die jeweils zur Herstellung benötigten Ausgangs- oder Zwischenprodukte.

Besonders bevorzugt ist die Verbindungen der Formel (I-1)

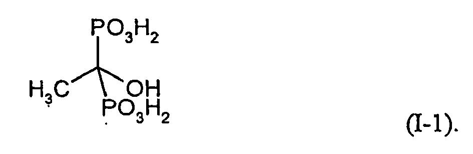

Ebenfalls besonders bevorzugt ist die Verbindungen der Formel (I-2)

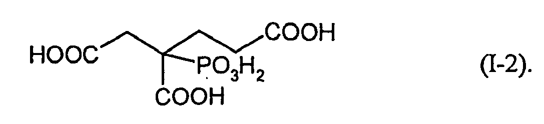

Ebenfalls besonders bevorzugt ist die Verbindungen der Formel (I-3)

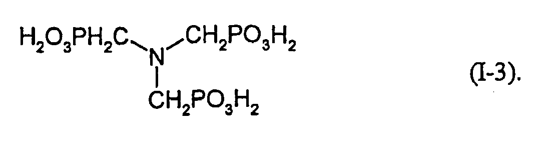

Ebenfalls besonders bevorzugt ist die Verbindungen der Formel (I-4)

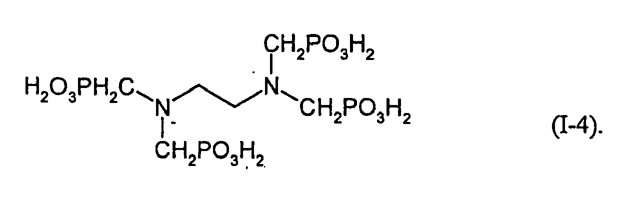

Ebenfalls besonders bevorzugt ist die Verbindungen der Formel (I-5)

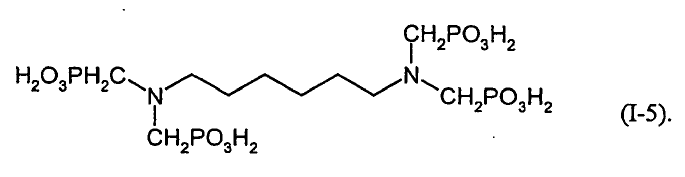

Ebenfalls besonders bevorzugt ist die Verbindungen der Formel (I-6)

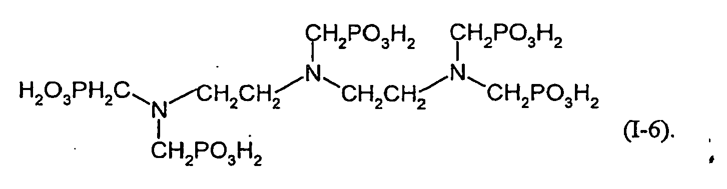

Ebenfalls besonders bevorzugt ist die Verbindungen der Formel (I-7)

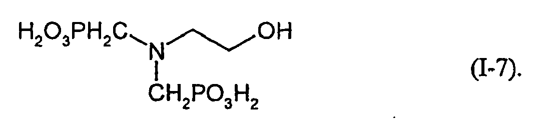

Als Salze der Phosphonsäureester kommen vorzugsweise deren Ammonium-, Lithium-, Natrium-, Kalium-, Magnesium-, Calcium-, Eisen-II- und Eisen-III-Salze in Frage. Bei diesen Salzen kann es sich um einheitliche oder gemischte Salze handeln. Unter einheitlichen Salzen sind hierbei solche Salze zu verstehen, die nur eines der genannten Kationen enthalten. Unter gemischten Salzen sind solche Salze zu verstehen, die verschiedene der genannten Kationen enthalten. Außerdem kommen auch solche Salze in Betracht, in denen nicht alle H₂O₃P-Gruppen der Phosphonsäureester in Salzform vorliegen.

Die Phosphonsäureester der Formel (I) und deren Salze sind bekannt oder lassen sich nach bekannten Methoden herstellen.

Neben der Phosphonsäureester der Formel (I) bzw. deren Salzen können in den erfindungsgemäßen Schneckenködern auch eines oder mehrere Magnesium-, Calcium- und/oder Eisen-Salze enthalten sein.

Als Salze der genannten Metalle kommen vorzugsweise Sulfate, Carbonate und Phosphate in Betracht. Beispielhaft genannt seien Magnesiumsulfat, Magnesiumcarbonat, Calciumsulfat, Calciumcarbonat, Eisen(II)sulfat, Eisen(III)sulfat, Eisen(II)-hydrogensulfat, Eisen(III)hydrogensulfat, Eisen(II)hydrogenphosphat, Eisen(III)-hydrogenphosphat, Eisen(II)hydrogencarbonat, Eisen(II)phosphat, Eisen(III)phosphat, Eisen(II)carbonat und Eisen(III)carbonat. Die Salze können als Hydrate oder in wasserfreier Form vorliegen. Besonders bevorzugt sind Eisen(II)phosphat, Eisen(III)-phosphat, Eisen(II)hydrogenphosphat, Eisen(III)hydrogenphosphat, Eisen(II)-dihydrogenphosphat und Eisen(III)dihydrogenphosphat,

Als Getreidemehle können in den erfindungsgemäßen Schneckenködern handelsübliche Mehle, wie Weizenmehl, Roggenmehl, Reisstärke u.a., enthalten sein. Bevorzugt sind Hartweizenmehl und Weichweizenmehl. Das Mehl ist in feinkörniger Form vorhanden, vorzugsweise in Korngrößen unterhalb von 250 µ.

Als Bindemittel können in den erfindungsgemäßen Ködern alle üblichen, zur Herstellung derartiger Zubereitungen verwendbaren Kleber enthalten sein. Vorzugsweise in Betracht kommen modifizierte Stärke, Formaldehyd abspaltende Substanzen, gegebenenfalls teilverseiftes Polyvinylacetat und/oder Melasse.

Unter modifizierter Stärke sind im vorliegenden Fall handelsübliche Produkte dieses Typs zu verstehen. Bevorzugt ist kaltquellende Maisstärke.

Als Formaldehyd abspaltende Substanzen können alle üblichen Produkte enthalten sein, die zur Freisetzung von Formaldehyd geeignet sind. Bevorzugt sind Harnstoff-Formaldehyd-Kondensationsprodukte.

Als Polyvinylacetate, die gegebenenfalls in teilweise verseifter Form vorliegen können, kommen vorzugsweise die unter den Handelsnamen Mowilith® (Firma Clariant) und Mowiol® (Firma Clariant) bekannten Produkte in Frage.

Unter Melasse sind im vorliegenden Fall übliche, bei der Fabrikation von Zucker anfallende, sirupöse Mutterlaugen zu verstehen.

Als Zusatzstoffe, die in dem erfindungsgemäßen Ködern enthalten sein können, kommen vorzugsweise Konservierungsmittel, Farbstoffe, Schneckenlockstoffe, Mahlhilfsmittel, Additive, Bitterstoffe, Warmblüter-Repellents und Anticakingmittel in Betracht, sowie auch Wasser und weitere molluskizide Wirkstoffe.

Als Konservierungsmittel kommen alle üblichen, für diesen Zweck geeigneten Substanzen in Betracht. Vorzugsweise genannt seien 2-Hydroxybiphenyl, Sorbinsäure, p-Hydroxy-benzaldehyd, p-Hydroxy-benzoesäure-methylester, Benzaldehyd, Benzoesäure, p-Hydroxy-benzoesäure-propylester und p-Nitro-phenol genannt.

Als Farbstoffe kommen alle üblichen, für diesen Zweck geeignete Substanzen in Betracht. Vorzugsweise genannt seien anorganische Pigmente, wie Eisenoxid, Titandioxid und Ferrocyanblau, sowie organische Farbstoffe, wie Anthrachinon-, Azo- und Metallphthalocyaninfarbstoffe erwähnt.

Als Schneckenlockstoffe kommen alle üblichen, für diesen Zweck geeigneten Substanzen in Betracht. Beispielhaft genannt seien Pflanzenextrakte und deren Folgeprodukte, sowie Produkte tierischer Herkunft.

Als Mahlhilfsmittel kommen alle für diesen Zweck geeigneten Substanzen in Frage. Beispielhaft genannt seien Kaoline, Tonerden, Talkum, Kreide, Quarzpulver und hochdispersen Kieselsäure.

Als Additive kommen Substanzen in Frage, die zur Einstellung des pH-Wertes in den Köder-Zubereitungen geeignet sind. Beispielhaft genannt sei Zitronensäure.

Als Bitterstoffe kommen alle für diesen Zweck üblichen Substanzen in Frage. Beispielhaft genannt sei Denatonium-benzoat.

Als Warmblüter-Repellents, die eine abweisende Wirkung auf warmblütige Lebewesen, wie Hunde oder Igel, ausüben, kommen alle für diesen Zweck üblichen Substanzen in Betracht. Beispielhaft genannt sei Nonylsäure-vanillylamid.

Als Anticakingmittel kommen alle für diesen Zweck üblichen Stoffe in Betracht, die ein Verklumpen und Zusammenbacken verhindern. Beispielhaft genannt seien Feuchtigkeit adsorbierende Pulver, wie Kieselgur, pyrogene Kieselsäuren, Tricalciumphosphat, Calciumsilikate, Aluminiumoxid, Magnesiumoxid, Magnesiumcarbonat, Zinkoxid, Stearate und Fettamine.

Als zusätzliche molluskizide Wirkstoffe kommen alle für diesen Zweck geeigneten Substanzen in Betracht. Beispielhaft genannt seien Mehtiocarb, Metaldehyd sowie Metallsalze, gegebenenfalls im Gemisch mit Komplexbildnern, wobei Chelate aus Ethylendiamin-tetraessigsäure und Eisen- und/oder Kupferionen beispielhaft genannt seien.

Der Gehalt an den einzelnen Komponenten kann in den erfindungsgemäßen Schneckenködern innerhalb eines bestimmten Bereiches variiert werden. So liegen die Konzentrationen
- an Phosphonsäureester der Formel (I) und/oder deren Ammonium-, Alkalimetall-, Erdalkalimetall- und/oder Eisen-Salzen, gegebenenfalls im Gemisch mit einem oder mehreren Magnesium-, Calcium- und/oder Eisen-Salzen im Allgemeinen zwischen 1,0 und 25 Gew.-%, vorzugsweise zwischen 5,0 und 20 Gew.-%.
- an Getreidemehl im Allgemeinen zwischen 50 und 95 Gew.-%, vorzugsweise zwischen 60 und 90 Gew.-%,
- an Bindemittel im Allgemeinen zwischen 0 und 20 Gew.-%, vorzugsweise zwischen 0 und 15 Gew.-%,
- an Zusatzstoffen im Allgemeinen zwischen 0 und 5,0 Gew.-%, vorzugsweise zwischen 0 und 3,0 Gew.-%.

Bei der Durchführung des erfindungsgemäßen Verfahrens werden vorzugsweise diejenigen Komponenten eingesetzt, die bereits im Zusammenhang mit der Beschreibung der erfindungsgemäßen Schneckenköder als bevorzugte Bestandteile genannt wurden.

Als Verdünnungsmittel können bei der Durchführung inerte organische Solventien und/oder Wasser eingesetzt werden. Vorzugsweise wird Wasser verwendet.

Die Mengen an den einzelnen Komponenten werden so gewählt, dass die Substanzen in den erfindungsgemäßen Schneckenködern in denjenigen Gewichtsverhältnissen vorhanden sind, die oben erwähnt wurden. Die Menge an Wasser bzw. an Verdünnungsmittel wird jedoch so bemessen, dass in der Stufe (3) des Verfahrens ein Teig entsteht. Die eingesetzte Menge an Wasser liegt im allgemeinen zwischen 25 und 35 Gew.-%, vorzugsweise zwischen 27 und 34 Gew.-%, bezogen auf die übrigen Bestandteile. In den erfindungsgemäßen Schneckenködern ist der Gehalt an Wasser aber deutlich niedriger, weil das zunächst feucht anfallende Produkt in der Stufe (5) des Herstellungsverfahrens noch getrocknet wird. Es verbleibt praktisch nur die im Getreidemehl vorhandene Restfeuchtigkeit.

Die Temperaturen können bei der Durchführung des erfindungsgemäßen Verfahrens in einem bestimmten Bereich variiert werden. Man arbeitet bei der Durchführung
- der Stufe (1) im Allgemeinen bei Temperaturen zwischen 0°C und 30°C, vorzugsweise bei Raumtemperatur,
- der Stufe (2) im Allgemeinen bei Temperaturen zwischen 0°C und 30°C, vorzugsweise bei Raumtemperatur,
- der Stufe (3) im Allgemeinen bei Temperaturen zwischen 0°C und 40°C, vorzugsweise zwischen 10°C und 30°C,
- der Stufe (4) im Allgemeinen bei Temperaturen zwischen 20°C und 60°C, vorzugsweise zwischen 30°C und 50°C und
- der Stufe (5) im Allgemeinen bei Temperaturen zwischen 20°C und 90°C, vorzugsweise zwischen 30°C und 80°C.

Bei der Durchführung der Stufen (1) bis (3) und (5) des erfindungsgemäßen Verfahrens arbeitet man im Allgemeinen unter Atmosphärendruck. Es ist aber auch möglich, den Trocknungsprozess in der Stufe (5) unter vermindertem Druck durchzuführen. Bei der Durchführung der Stufe (4) arbeitet man im Allgemeinen unter erhöhtem Druck, vorzugsweise unter einem Druck zwischen 30 und 100 bar.

Bei der Durchführung des erfindungsgemäßen Verfahrens können alle für derartige Prozesse üblichen Geräte eingesetzt werden. So kommen für die Mischvorgänge in den Stufen (1) bis (3) übliche Mischer in Frage, in die während des Mischvorganges zusätzliche Substanzen, wie Getreidemehl, Bindemittel, Verdünnungsmittel bzw. Wasser gegeben werden können. Vorzugsweise verwendbar sind Pflugscharmischer, Paddelmischer und Zwei-Wellen-Extruder.

Zur Extrusion in der Stufe (4) kommen in der Lebensmittelindustrie übliche Geräte in Betracht, mit deren Hilfe ein Teig durch Lochscheiben strangförmig verpresst und anschließend zerkleinert werden kann.

Zum Trocknen des feuchten Produktes in der Stufe (5) kommen übliche Apparate in Frage, die zum Entzug von Feuchtigkeit aus teilchenförmigen Festsubstanzen geeignet sind. In einer bevorzugten Ausführungsform arbeitet man in der Weise, dass man das feuchte Produkt zunächst in einem Wirbelbett vortrocknet und anschließend in einem separaten Gerät auf die gewünschte Endfeuchtigkeit trocknet.

Im Einzelnen geht man bei der Durchführung des erfindungsgemäßen Verfahrens so vor, dass man
- in der Stufe (1) eine Lösung oder Suspension ("Vormischung") aus Phosphonsäureester bzw. deren Salzen,
   gegebenenfalls im Gemisch mit weiteren der genannten Metall-Salze, sowie Verdünnungsmittel, vorzugsweise Wasser und
   gegebenenfalls einem oder mehreren weiteren molluskiziden Wirkstoffen sowie gegebenenfalls Zusatzstoffen, wie beispielsweise Konservierungsstoffen, Farbstoffen, Additiven usw. herstellt,
- in der Stufe (2) die erhaltene Vormischung mit feinkörnigem Getreidemehl, gegebenenfalls mit Bindemittel und gegebenenfalls mit weiteren Zusatzstoffen zu einem homogenen Produkt vermischt,
- in der Stufe (3) soviel Wasser unter Mischen und Kneten hinzufügt, dass ein Teig entsteht,
- in der Stufe (4) den Teig unter Druck extrudiert und zerkleinert und
- in der Stufe (5) das teilchenförmige Material zunächst vor- und dann nachtrocknet und anschließend auf Raumtemperatur abkühlt.

In einer alternativen Ausführungsform können in Stufe (1) auch pulvrige Vormischungen bereitgestellt werden, welche in der Stufe 2 mit der Phosphonsäurelösung und der Kleberlösung zu einem Teig verarbeitet werden.

In einer alternativen Ausführungsform kann Stufe (3) entfallen, insbesondere wenn der Teig bereits die gewünschte Konsistenz aufweist.

In einer alternativen Ausführungsform erfolgt der Übergang von Vor- und Nachtrocknen kontinuierlich.

Die Größe der Schneckenköder kann bei der Durchführung des erfindungsgemäßen Verfahrens in der jeweils gewünschten Weise innerhalb eines bestimmten Bereiches variiert werden. Man zerkleinert den Teig im Allgemeinen so, dass Pellets oder strangförmige Teilchen entstehen. Der durchschnittliche Durchmesser beziehungsweise die durchschnittliche Länge der Teilchen liegt im Allgemeinen zwischen 1 und 4 mm, vorzugsweise zwischen 1,5 und 3 mm.

Die erfindungsgemäßen Schneckenköder eignen sich sehr gut zur Bekämpfung von terrestrischen Schnecken in der Landwirtschaft und im Gartenbau. Zu den Schnecken gehören alle landlebenden Nackt- und Gehäuseschnecken, welche in der Mehrzahl als polyphage Schädlinge landwirtschaftlicher und gärtnerischer Kulturen auftreten. Wichtige derartige Schädlinge sind Nacktschnecken, wie Arion rufus (Große Wegschnecke), Arion ater und andere Arionidae, Limax-Arten, ferner Ackerschnecken, wie Deroceras reticulatum und agreste aus der Familie Limacidae, sowie Arten aus der Familie Milacidae, und außerdem schädliche Gehäuseschnecken, wie solche der Gattung Cepaea, Discus, Helicigona und Helicella.

Bei der Bekämpfung von Schnecken kann die Aufwandmenge an den erfindungsgemäßen Ködern innerhalb eines größeren Bereiches variiert werden. Im Allgemeinen verwendet man zwischen 2 und 15 kg Schneckenköder pro Hektar, vorzugsweise zwischen 3 und 7 kg pro Hektar.

Die erfindungsgemäßen Schneckenköder können nach üblichen Methoden, wie beispielsweise durch Streuen und Eindrillen, ausgebracht werden.

Die Erfindung wird durch die folgenden Beispiele veranschaulicht.

### Herstellungsbeispiele

### Beispiel 1: Herstellung von erfindungsgemäßem Schneckenköder

In einem Pflugscharmischer werden die pulvrigen Bestandteile vorgemischt. Hierzu werden 9959 g Hartweizenmehl mit einer Korngröße von unter 250µm und 392 g Eisen-III-phosphat-hydrat 5 Minuten homogenisiert. Die Feststoffmischung wird danach in einen Teigkneter transferiert.

660 g einer ca. 60 %igen Phosphonsäure der Formel (I-1) [HEDP; Handelsprodukt der Fa. ZSM; pH 1] hat, werden mit 170 g Wasser verdünnt und anschließend langsam unter Rühren und bei Raumtemperatur in den Teigkneter gegeben. Nach vollständiger Zugabe wird noch 10 Minuten nachgemischt.

2004 g einer ca. 60 %igen Polyvinylacetat-Dispersion (Mowilith) werden mit 170 g Wasser verdünnt und anschließend ebenfalls in den Teigkneter unter Rühren hinzugegeben. Auch hier wird wie oben nach vollständiger Zugabe 10 Minuten nachgerührt und geknetet. Der dabei entstehende, homogene Teig wird bei 40°C unter einem Druck von 60 bar durch eine Lochscheibe mit Bohrungen mit einem Durchmesser von 2,2 mm in Form von Strängen extrudiert, die mit Hilfe von rotierenden Messern in 2 bis 3 mm lange, zylindrische Stücke zerkleinert werden. Das anfallende Material wird in einem Wirbelbett 30 Minuten lang durch einen Luftstrom getrocknet, dessen Temperatur von 20°C an kontinuierlich gesteigert wird und am Ende des Trocknungsvorganges die Abluft eine Temperatur von 55°C erreicht. Danach lässt man das Produkt auf Raumtemperatur abkühlen und bewahrt es 3 Tage offen an der Luft auf, so dass sich die Gleichgewichtsfeuchtigkeit in den Pellets einstellt. Man erhält auf diese Weise ca. 12 000 g an Schneckenköder in Form von zylindrischen Pellets.

Überprüfung des pH-Wertes: Getrocknete Pellets werden fein gemahlen und als 10 gew.-%ige Suspension in Wasser 15 Minuten lang gerührt und 1 Minute absitzen geleassen. Der pH-Wert der wässrigen Phase beträgt 3,2.

### Verwendungsbeispiele

### Beispiel A: Bekämpfung von Schnecken / Freiland

- Testschnecken:: *Deroceras agresire*
- Testkultur:: *Tagetes patula*
- Testmethode:: Feldversuch; Versuchsgut Höfchen, Bergisches Land, DE
- Behandlungstag:: 27.05.2002

Ausstreuen von Köderformulierungen nach Beispiel 1 mit 5 g Formulierung je m² auf 10 qm große Parzellen mit 3 Wiederholungen. Der Vergleichsstandard Ferramol wurde ebenfalls mit 5 g Produkt/m² ausgebracht. Die Parzellen war mit je 10 Tagetes Pflanzen bepflanzt.

Die Auswertung erfolgt 3, 14 und 18 Tagen nach der Applikation durch Bestimmung des Fraßschadens (% Pflanzen mit Fraßschaden) an den Versuchspflanzen. Darüber hinaus wurde auch nach eventuellen Phytotoxissymptomen ausgewertet.

Der Wirkungsgrad der Testsubstanz beträgt 100 % (nach Abbott), wenn kein Fraßschaden festgestellt wurde bzw. er beträgt 0 %, wenn der Fraßschaden genau so stark ist wie in der Kontrolle.

| **Nr.** | **Köder** | **Dosis Produkt g/m**^{**2**} | **Fraßschaden bzw. Wirkung (%)** | | | **Phytotoxis-symtome 1-18 DAT** |
|---|---|---|---|---|---|---|
| | | | **7 DAT** | **14 DAT** | **18 DAT** | |
| 1 | Kontrolle (% Fraßschaden) | | (3) | (11,7) | (21,8) | - |
| 2 | gem. Beispiel 1 | 5 | 57 | 63 | 62 | keine |
| 4 | Ferramol* 1 RB | 5 | 0 | 30 | 0 | keine |

| | | | | | | |
|---|---|---|---|---|---|---|
| * Ferramol ist ein Handelsprodukt der Fa. Nerdorff, es enthält Eisen und EDTA | | | | | | |

### Beispiel B: Bekämpfung von Schnecken / Freiland

- Testschnecken:: *Arion hortensis*
- Testkultur:: *Tagetes erecta und Lactuca sativa*
- Testmethode:: Feldversuch; Versuchsgut Höfchen, Bergisches Land, DE
- Behandlungstag:: 09.08.2002

Ausstreuen von Köderformulierungen nach Bsp. 1 mit 5 g Formulierung je m² auf 6 qm große Parzellen mit 3 Wiederholungen. Der Vergleichsstandard Ferramol wurde ebenfalls mit 5 g Produkt/m² ausgebracht. Die Parzellen war mit je 10 Tagetes und Salat Pflanzen bepflanzt.

Die Auswertung erfolgt 3, 5, 7 und 11 Tagen nach der Applikation durch Bestimmung des Fraßschadens (% Pflanzen mit Fraßschaden) an den Versuchspflanzen. Dargestellt ist der Mittelwert des Fraßschadens an beiden Pflanzenarten. Darüber hinaus wurde auch nach eventuellen Phytotoxissymptomen ausgewertet.

Der Wirkungsgrad der Testsubstanz beträgt 100 % (nach Abbott), wenn kein Fraßschaden festgestellt wurde bzw. er beträgt 0 %, wenn der Fraßschaden genau so stark ist wie in der Kontrolle.

| **Variante** | **Präparat** | **Dosis Produkt g/m**^{**2**} | **Fraßschaden bzw. Wirkung in %** | | | | | **Phytotoxis-symtome 1-18 DAT** |
|---|---|---|---|---|---|---|---|---|
| | | | **3 DAT** | **5 DAT** | **7 DAT** | **11 DAT** | **18 DAT** | |
| 1 | Kontrolle (% Fraßschaden) | | (16) | (20) | (27) | (31) | (30) | - |
| | gem. Beispiel 1 | 5 | 75 | 70 | 69 | 67 | 78 | keine |
| 3 | Ferramol*1 RB | 5 | 72 | 78 | 80 | 77 | 78 | keine |

| | | | | | | | | |
|---|---|---|---|---|---|---|---|---|
| * Ferramol ist ein Handelsprodukt der Fa. Neudorff, es enthält Eisen und EDTA | | | | | | | | |

## Patentansprüche

1. Zusammensetzung, enthaltend
1)
a) Phosphonsäureester der Formel (I) 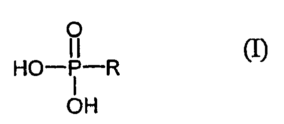 in welcher R für C₁-C₁₀Alkyl steht,
welches einfach oder mehrfach, gleich oder verschieden durch PO₃H₂, CO₂H, OH, NH₂, CN, Halogen, C₁-C₈-Alkylamin oder C₂-C₁₆₋Dialkylamin substituiert ist und
welches gegebenenfalls durch 1-6 Heteroatome aus der Reihe N, O, S, P unterbrochen ist, wobei Heteroatome nicht direkt miteinander verknüpft sind;
und
Ammonium-, Alkalimetall-, Erdalkalimetall- und/oder Eisen-Salze;
oder
b) Ammonium-, Alkalimetall-, Erdalkalimetall- und/oder Eisen-Salze der Phosphonsäureester der Formel (I)
und
2) feinkörniges Getreidemehl,
3) gegebenenfalls Bindemittel und
4) gegebenenfalls einen oder mehrere Zusatzstoffe.

2. Verfahren zur Herstellung von Zusammensetzungen gemäß Anspruch 1, **dadurch gekennzeichnet, dass** man
1) eine Vormischung aus
• Phosphonsäureester der Formel (I) nach Anspruch 1 und Ammonium-, Alkalimetall-, Erdalkalimetall- und/oder Eisen-Salzen,
oder
Ammonium-, Alkalimetall-, Erdalkalimetall- und/oder Eisen-Salze der Phosphonsäureester der Formel (I)
• mindestens einem Verdünnungsmittel und
• gegebenenfalls Zusatzstoffen herstellt,
2) die so erhaltene Vormischung mit
• feinkörnigem Getreidemehl,
• gegebenenfalls Bindemittel und
• gegebenenfalls Zusatzstoffen versetzt,
3) die resultierende Mischung gegebenenfalls mit soviel Wasser verrührt, dass ein homogener Teig entsteht,
4) den Teig extrudiert und zerkleinert und
5) das anfallende Produkt trocknet.

3. Verwendung von Zusammensetzungen gemäß Anspruch 1 zur Bekämpfung von terrestrischen Schnecken, **dadurch gekennzeichnet, dass** man die Zusammensetzung nach Anspruch 1 auf den Lebensraum der Schnecken ausbringt.

4. Verfahren zum Bekämpfen von terrestrischen Schnecken, **dadurch gekennzeichnet, daß** man Zusammensetzungen gemäß Anspruch 1 auf terrestrische Schnecken und/oder ihren Lebensraum einwirken läßt.

5. Verwendung von Verbindungen der Formel (I) gemäß Anspruch 1 zur Herstellung von molluskiziden Mitteln.

## Claims

1. Composition containing
1)
a) phosphonic acid esters of the formula (I) 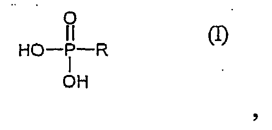 in which R represents C₁-C₁₀alkyl, which is mono- or polysubstituted by identical or different substituents from the series consisting of PO₃H₂, CO₂H, OH, NH₂, CN, halogen, C₁-C₈-alkylamine or C₂-C₁₆-dialkylamine and
which is optionally interrupted by 1-6 hetero atoms from the series consisting of N, O, S, P, where hetero atoms are not linked directly with one another;
and
ammonium, alkali metal, alkaline earth metal and/or iron salts;
or
b) ammonium, alkali metal, alkaline earth metal and/or iron salts of the phosphonic acid esters of the formula (I)
and which contain
2) finely divided cereal meal,
3) if appropriate binders and
4) if appropriate one or more additives.

2. Process for the preparation of compositions according to Claim 1, which comprises
1) preparing a premix of
• phosphonic acid esters of the formula (I) according to claim 1 and ammonium, alkali metal, alkaline earth metal and/or iron salts,
or
ammonium, alkali metal, alkaline earth metal and/or iron salts of the phosphonic acid esters of the formula (I),
• at least one and
• if appropriate additives,
2) treating the resulting premix with
• finely divided cereal meal,
• if appropriate binders and
• if appropriate additives,
3) stirring the resulting mixture if appropriate with such an amount of water that a homogeneous paste results,
4) extruding and comminuting the paste and
5) drying the product obtained.

3. Use of compositions according to Claim 1 for controlling terrestrial slugs and snails, **characterized in that** the composition according to Claim 1 is applied to the environment of the slugs and snails.

4. Method for controlling terrestrial slugs and snails, **characterized in that** compositions according to Claim 1 are allowed to act on terrestrial slugs and snails and/or their environment.

5. Use of compounds of the formula (I) according to Claim 1 for the preparation of molluscicidal compositions.

## Revendications

1. Composition comprenant
1)
a) des esters d'acide phosphonique de la formule (I) 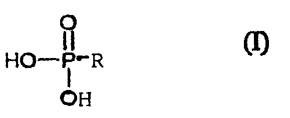 dans laquelle R représente un groupe alkyle en C₁-C₁₀,
qui est substitué une fois ou plusieurs fois, de manière identique ou différente par PO₃H₂, CO₂H, OH, NH₂, CN, un halogène, une alkylamine en C₁-C₈ ou une dialkylamine en C₂-C₁₆ et
qui est le cas échéant interrompu par 1-6 hétéroatomes de la série N, O, S, P, les hétéroatomes n'étant pas directement reliés l'un à l'autre;
et
des sels d'ammonium, de métaux alcalins, de métaux alcalino-terreux et/ou de fer; ou
b) des sels d'ammonium, de métaux alcalins, de métaux alcalino-terreux et/ou de fer des esters d'acide phosphonique de la formule (I)
et
2) de la farine de céréales à grains fins,
3) le cas échéant un liant et
4) le cas échéant un ou plusieurs additifs.

2. Procédé de fabrication de compositions suivant la revendication 1, **caractérisé en ce qu'**on
1) fabrique un prémélange à partir
* d'esters d'acide phosphonique de la formule (I) suivant la revendication 1 et de sels d'ammonium, de métaux alcalins, de métaux alcalino-terreux et/ou de fer,
ou
* de sels d'ammonium, de métaux alcalins, de métaux alcalino-terreux et/ou de fer des esters d'acide phosphonique de la formule (I)
* d'au moins un diluant et
* le cas échéant d'additifs,
2) on complète le prémélange ainsi obtenu avec
* de la farine de céréales à grains fins,
* le cas échéant un liant et
* le cas échéant des additifs,
3) on délaie le mélange résultant le cas échéant avec suffisamment d'eau pour obtenir une pâte homogène,
4) on extrude la pâte et on la broie et
5) on sèche le produit obtenu.

3. Utilisation de compositions suivant la revendication 1 pour la lutte contre les limaces terrestres, **caractérisée en ce qu'**on répand la composition suivant la revendication 1 dans le biotope des limaces.

4. Procédé de lutte contre les limaces terrestres, **caractérisé en ce qu'**on laisse agir des compositions suivant la revendication 1 sur les limaces terrestres et/ou leur biotope.

5. Utilisation de composés de la formule (I) suivant la revendication 1 pour la fabrication de moyens molluscides.
